# EUROPEAN PATENT APPLICATION

(11) **EP 1 732 047 A1**
(43) Date of publication of application: **13.12.2006**
(21) Application number: 06009769.8
(22) Date of filing: 11.05.2006
(51) Int. Cl.: G07F 19/00, G07F 7/10

(54) **Automated teller machine**

(30) Priority: 03.06.2005 JP 2005163596
(71) Applicant: Hitachi-Omron Terminal Solutions, Corp., Shinagawa-ku Tokyo 141-0032 (JP)
(72) Inventor: Fujioka, Toshinori c/o Hitachi Ltd., 1-chome Chiyoda-ku Tokyo 100-8220 (JP)
(74) Representative: Strehl Schübel-Hopf & Partner

(57) **Abstract**

The object of the invention is to execute a process of updating an IC card by the operation of a user using an automated teller machine and secure the handiness for the user and security. To achieve the object, the automated teller machine such as an ATM that authenticates a user based upon his/her biometric data and permits the user to perform a transaction in cash is provided with a display device that displays guidance for transaction for the user, an input device on which the user performs input operation, a medium handling mechanism provided with a reader/writer that reads/writes information from/to a memory of a medium used by the user such as an IC card, a biometric data acquisition unit that acquires biometric data of the user and a processor that stores new biometric data of the user acquired by the biometric data acquisition unit in the memory of the medium and executes a process for updating the medium of the user when it is determined that the user is a right person as a result of authentication based upon biometric data acquired from the biometric data acquisition unit.

## Description

### BACKGROUND OF THE INVENTION

The present invention relates to an automated teller machine, particularly relates to a cash automated teller machine that reads the biometric data of a user, authenticates that the user is the corresponding person and performs a transaction in a financial institution and a process for updating biometric data in a transaction system.

Recently, there have frequently occurred incidents in which cash is unfairly withdrawn using a stolen card and a forged card at a cash automated teller machine (hereinafter called ATM) such as a cash dispenser (called CD) and a cash automated deposit/withdrawal machine. Therefore, further enhancement of security for transaction in cash at ATMs is demanded. For one measure, a system is being realized that registers biometric data such as a fingerprint of a user in an IC chip of a mobile telephone and a card issued by a financial institution and checks whether the user is the corresponding person or not utilizing the biometric data.

Normally, for a user to start transaction by biometrics authentication, as an issued IC card is mailed home afterward when the user first applies to a financial institution for such transaction, the user has the received IC card with him/her and visits an office of the financial institution and others. The biometric data of the user himself/herself is read from a biometric data reader by the operation of a bank clerk and is registered in the brought IC card. In transaction at an ATM, if both biometric data are matched by reading biometric data of the user by the biometric data reader provided to the ATM and collating it with biometric data registered in the IC card beforehand, it is authenticated that the user is a right person and transaction is started.

An expiration date such as five years after a medium (hereinafter called a mobile medium) such as a mobile telephone and an IC card is issued is set and therefore, the update of the medium is required. For a method of updating a mobile medium, in JP-A No. 152833/1995 (Patent Reference 1) for example, it is disclosed that when an expiration date passes, a message to a user that his/her card should be updated is output. In JP-A No. 86969/2002 (Patent Reference 2), it is disclosed that a fingerprint registered in a mobile medium and a fingerprint read from a user who visits to apply for update are collated and the user is authenticated. Further, in JP-A No. 110365/2004 (Patent Reference 3), it is disclosed that new and old mobile media are connected, a registered fingerprint and a fingerprint read from a user who applies for update are collated, and when the user may be authenticated, data is transferred and written from the old mobile medium to the new one.

### SUMMARY OF THE INVENTION

When an expiration date of an IC card approaches, a user is required to visit an office of a financial institution to update the IC card, biometric data is read from a reader by the operation of a bank clerk, and new biometric data is required to be registered in a new IC card. It is troublesome for a user to go to a designated location for such a procedure for update and for the financial institution, processing for the update procedure is required, and such a situation is not efficient.

The object of the invention is to enhance the handiness of a user by executing a process for updating an IC card by the operation of the user using an automated teller machine and to provide the automated teller machine, a system and a method in which security is secured.

The automated teller machine according to the invention is desirably based upon an automated teller machine that authenticates biometric data of a user and permits the user to perform a transaction in cash, and is provided with a display device for displaying guidance for transaction for a user, an input device on which the user performs input operation, a medium handling mechanism provided with a reader/writer that reads/writes information from/to a memory of the medium used by the user, a biometric data acquisition unit that acquires biometric data of the user and a processor that stores new biometric data of the user acquired by the biometric data acquisition unit in the memory of the medium and executes a process for updating the medium of the user when it is determined that the user is a right person as a result of authentication based upon the biometric data acquired by the biometric data acquisition unit.

In a preferable example, information related to an expiration date stored in the memory of the medium is acquired from the reader/writer, the processor calculates a residual period of the medium based upon the expiration date, and when the processor determines that the residual period is equal to or shorter than a predetermined period, the processor instructs to display related information on the display.

Preferably, information related to an expiration date stored in the memory is acquired from the reader/writer, the processor calculates a residual period of the medium based upon the expiration date, when the residual period is equal to or shorter than a predetermined period, methods of updating the medium are displayed on the display to enable a user to select any of them.

For one example, the medium handling mechanism accepts a new IC card brought and inserted by a user and the reader/writer writes new biometric data in a memory of the new IC card.

In a preferable example, an IC card issue device that stores a plurality of new IC cards is further provided, the IC cards are ejected one by one from the IC card issue device according to a request, and new biometric data is stored in memories of the IC cards via the reader/writer.

In one example, a camera that photographs a user's face is further provided and when biometric data is updated, image data of the user's face photographed by the camera is stored in a memory of a new IC card.

In one example, when biometric data is updated and a new medium is issued, methods of disposing an old medium are displayed on the display, a user is requested to select any of the methods via the input device, and when a method of withdrawing the old medium in the automated teller machine is selected, the processor instructs the reader/writer to write "expiry" to a field of information related to an expiration date stored in a memory of the old medium.

The automated teller machine according to the invention is configured as follows. That is, it is based upon an automated teller machine that authenticates that a user is a right person using biometric data (first biometric data) of the user stored in a memory provided in a medium and permits the user to perform a transaction in cash, and is provided with a display device that displays guidance for transaction for the user, an input device on which the user performs input operation, a medium handling mechanism having a reader/writer that reads/writes information from/to the memory of the medium, a biometric data acquisition unit that acquires biometric data of the user and a processor that stores the first biometric data and new biometric data (second biometric data) of the user acquired by the biometric data acquisition unit in a memory of a new medium and executes a process for updating the medium of the user when it is determined that the user is a right person as a result of authentication based upon biometric data acquired by the biometric data acquisition unit.

In a preferable example, collating means for collating biometric data with biometric data stored in a memory of a medium is provided to the medium and a user is authenticated according to a result of collation by the collating means.

Preferably, when a user performs a transaction using a medium after a process for updating the medium, the collating means collates biometric data acquired from the biometric data acquisition unit with either of the first or second biometric data stored in the memory of the medium and if both biometric data are matched as a result of collation, the processor permits the user to perform a transaction.

In one example, the collating means collates the second biometric data before the first biometric data.

In one example, the collating means collates the second biometric data acquired from the biometric data acquisition unit and the first biometric data stored in the memory after the first and second biometric data are stored in the memory of the medium.

A transaction system according to the invention is based upon a cash transaction system provided with an automated teller machine that authenticates a user who utilizes a medium for transaction based upon his/her biometric data and permits the user to perform a transaction in cash and a computer connected to the automated teller machine and having a database that manages ledger data including account information of the user, and is characterized in that account information for transaction, information related to the update of the medium and biometric data of the user are stored in a memory provided in the medium, the automated teller machine is provided with a display device for displaying guidance for transaction for the user, an input device on which the user performs input operation, a medium handling mechanism provided with a reader/writer that reads/writes information from/to the memory of the medium, a biometric data acquisition unit that acquires biometric data of the user and a processor that stores new biometric data of the user acquired by the biometric data acquisition unit in the memory of the medium and executes a process for updating the medium of the user when it is determined that the user is a right person as a result of authentication based upon biometric data acquired from the biometric data acquisition unit, and the host computer registers information related to the update of the medium, relating to account information of the user when the medium of the user is updated.

In a preferable example, authentication based upon biometric data is made by collating biometric data acquired from the biometric data acquisition unit and biometric data stored in the memory of the medium by the execution of a CPU provided in the medium.

For one example, authentication based upon biometric data is made by collating biometric data acquired from the biometric data acquisition unit with biometric data of a user registered in the database beforehand, by the processing of the host computer.

In one example, if personal information of a user is changed, it is updated by storing changed personal information input from the input device by the user in the memory of the medium.

A transaction method according to the invention is based upon an automated transaction method in which a user operates an automated teller machine utilizing a card medium, biometric data of the user is authenticated and the user is permitted transaction in cash, and is characterized in that the automated transaction method is provided with a biometric data acquisition step for acquiring biometric data of the user by a biometric data detector in transaction, a step for collating the acquired biometric data with biometric data (first biometric data) of the user stored in a memory provided in the medium, a step for storing the first biometric data and new biometric data (second biometric data) of the user acquired by the biometric data detector in a memory of a new medium when it is determined that the user is a right person as a result of collation and a step for ejecting the new medium toward the user.

In one example, when a user transacts using the new medium, biometric data acquired from the biometric data detector and the first or second biometric data stored in the memory of the new medium are collated and if both biometric data are matched as a result of collation, transaction of the user is permitted.

According to the invention, as a process for updating an IC card is enabled using the automated teller machine, the handiness of a user is enhanced and the automated teller machine in which security is secured may be realized.

### BRIEF DESCRIPTION OF THE DRAWINGS

Fig. 1 is a block diagram showing the configuration of an ATM equivalent to this embodiment;
Fig. 2 shows the appearance of an IC card;
Fig. 3 shows the outline of a cash transaction system including ATM;
Fig. 4 shows an example of service functions provided to the IC card;
Fig. 5 shows an example of a format of data registered in a memory of the IC card;
Fig. 6 shows an example of a format of an account ledger registered in a DB 206 of a host computer;
Fig. 7 shows a plan of the update of the IC card;
Fig. 8 is a flowchart showing a process for transaction in this embodiment;
Fig. 9 is a flowchart showing a process for updating an IC card in this embodiment;
Fig. 10 is a flowchart showing the process for updating the IC card in this embodiment;
Fig. 11 is a flowchart showing a process for updating an IC card in another embodiment;
Fig. 12 is a flowchart showing a process from the verification of registration to a new IC card to the disposal of an old IC card in another embodiment;
Fig. 13 is a side view showing an example of the configuration of a card mechanism 105 in this embodiment;
Fig. 14 shows an example of a transaction select screen of an ATM in this embodiment;
Fig. 15 shows an example of a transaction guidance screen of an ATM in this embodiment;
Fig. 16 shows an example of a transaction guidance screen of an ATM in this embodiment; and
Fig. 17 shows an example of a transaction guidance screen of an ATM in this embodiment.

### DETAILED DESCRIPTION OF THE PREFERRED EMBODIMENTS

Referring to the drawings, embodiments of the invention will be described below.

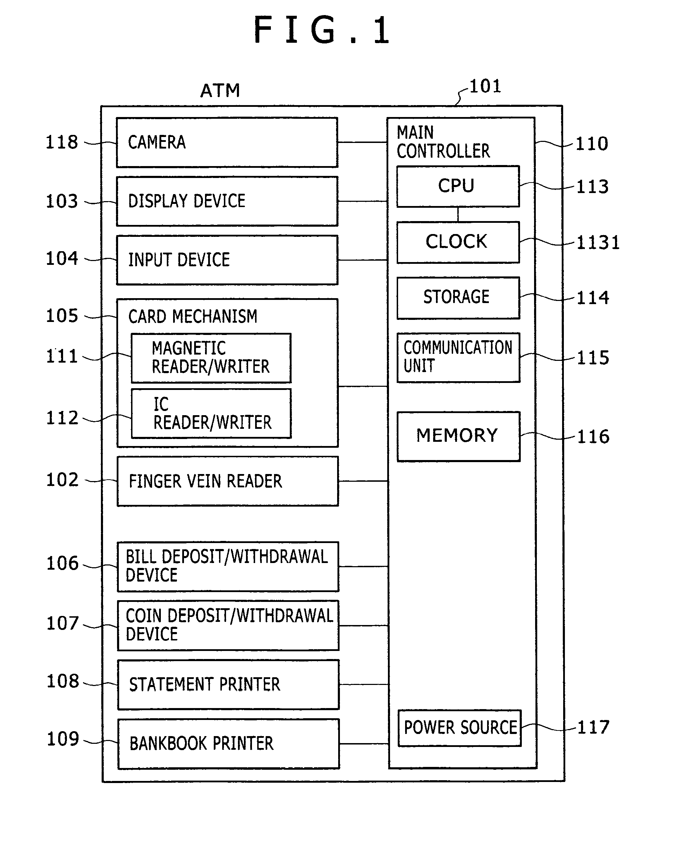

Fig. 1 is a block diagram showing the configuration of an ATM equivalent to one embodiment.

An ATM 101 is provided with a finger vein reader 102 that reads a finger vein pattern of a user as biometric data, a display device 103 such as a liquid crystal display for displaying the contents of transaction for the user, an input device 104 such as a touch panel for inputting information for the transaction by being operated by the user, a card mechanism 105 for processing an inserted card, a bill deposit/withdrawal device 106 that processes a deposited/withdrawn bill, a coin deposit/withdrawal device 107 that processes a deposited/withdrawn coin, a statement printer 108 that prints the contents of the transaction on a statement, a bankbook printer 109 that prints the contents of the transaction on a bankbook, a camera 118 that photographs the user's face from the front of the ATM 101 and a main controller 110 that controls the processing operation of each device.

The main controller 110 is provided with a clock 1131 that times current time, a CPU 113 that periodically receives a clock signal from the clock 1131 and controls the processing of each device according to the execution of a program, a storage 114 that stores a program executed in the CPU 113 and transaction information, a communication unit 115 that communicates data with a host computer 207 and a server, a memory 116 for periodically recording the data of transaction with the user and a power source 117.

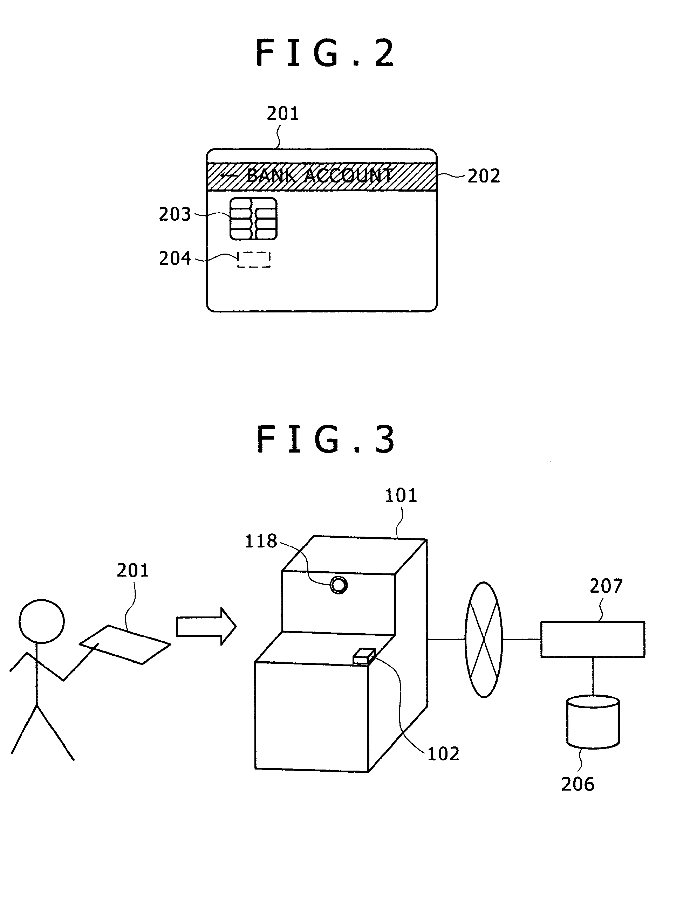

The card mechanism 105 is provided with a magnetic reader/writer 111 that reads/writes data from/to a magnetic stripe of an IC card (see Fig. 2) inserted by a user and an IC reader/writer 112 that reads/writes information from/to the storage of the IC chip.

Fig. 2 shows an example of an IC card 201 used in this embodiment.

In the IC card 201, a magnetic stripe 202 is provided to the surface and a contact type IC chip 203 provided with a memory and a microprocessor (CPU) is mounted inside. The contact type IC card transmits information to the IC reader/writer 112 via a contact.

A non-contact type IC card 201 is provided with a radio communication unit 204 including an antenna. The non-contact type IC card 201 is further also equipped with a function of the non-contact type IC card and the radio communication unit 204 may also be mounted.

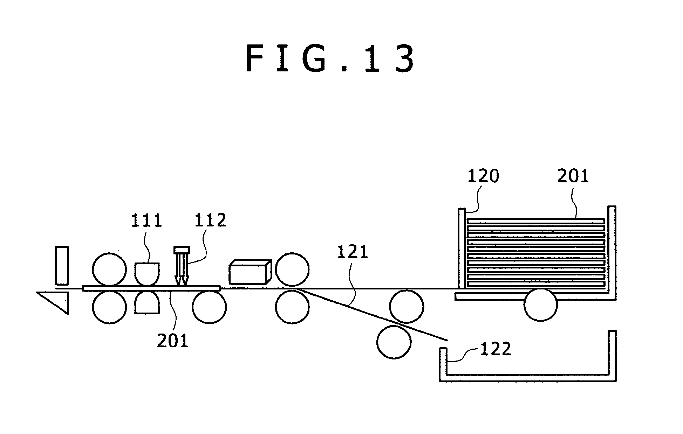

Fig. 13 shows an example of the configuration of the card mechanism 105 shown in Fig. 1.

The magnetic reader/writer 111 is provided with a magnetic head and reads the information of the magnetic stripe 202 of the IC card 201 inserted into the card mechanism 105. The IC reader/writer 112 is provided with the contact and reads information in the IC chip 203 via the contact of the IC card 201 or writes information to a memory of the IC chip. If the IC card 201 is a non-contact type card, the IC reader/writer 112 is provided with a radio communication unit including an antenna.

In this embodiment, the card mechanism 105 is provided with an IC card issue device 120 and the IC card issue device stores a plurality of new IC cards 201. When the IC card issue device is instructed to issue a new card by the main controller 110, it once sends the inserted IC card 201 (the old card) to an expellant/withdrawal route 121 and afterward, a new IC card 201 is sent from the IC card issue device 120 to a carrier. Information is written to the memory of the IC chip 203 by the IC reader/writer 112 and the new IC card is ejected toward the user. An IC card 201 instructed to dispose by a user is withdrawn in a withdrawal box 122 via the expellant/withdrawal route 121.

Fig. 3 shows the outline of a cash transaction system including ATM.

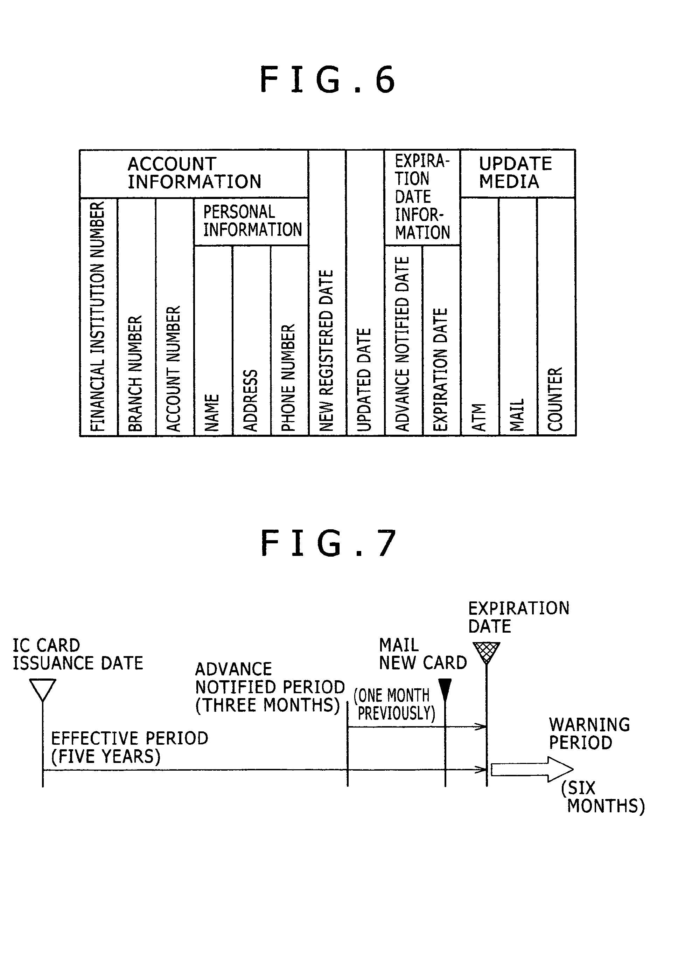

When a user performs a transaction at the ATM 101 using his/her IC card 201, various information related to the authentication of the user and transaction is sent to the host computer 207 in a center, it is authenticated that the user is the corresponding person, and the information of the user's account balance stored in a database (DB) 206 is updated. A registered data format of the user's account ledger stored in the DB 206 will be described later, referring to Fig. 6.

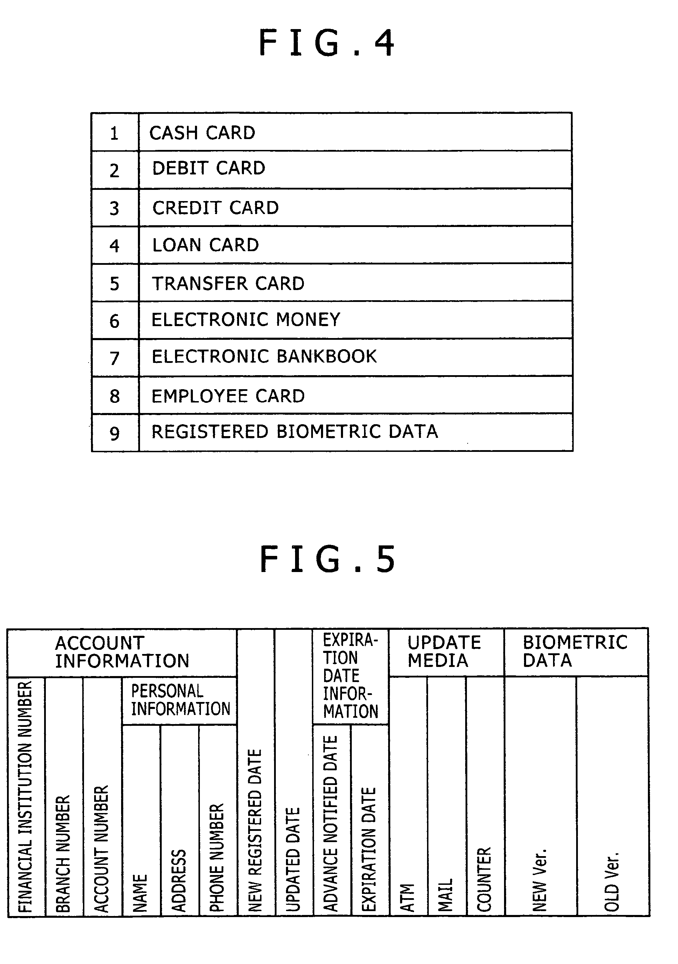

Fig. 4 shows service functions built in the IC chip 203.

The account information of a cash card supported by a financial institution that issues the card and a credit card and a finger vein pattern of a user as biometric data are stored in the memory of the IC chip 203.

Fig. 5 shows an example of a data format registered in the memory in the IC chip 203 of the IC card 201.

For data registered in the IC card, the account information of a user, newly registered and update dates, expiration information, an update method and registered biometric data are included. As the expiration information, information showing an expiration date and notice started timing is included. The update method means information showing a method of updating an IC card and includes a case that update is made for the new IC card at an ATM, a case that the new IC card is mailed to its user and a case that the user goes to a bank. The user may select one method out of these by operation on the input device of the ATM. For the biometric data, new biometric data (a new version) and old biometric data (an old version) are included.

Fig. 6 shows an example of a format of an account ledger registered in the DB 206 of the host computer.

As the data of the account ledger, account information of a user, newly registered and update dates, expiration information and an update method are included. Though not shown, transaction information (unentered data) not entered in a bankbook, account balance information and personal identification number (PIN) information are further included. These information pieces may also be stored in the same DB or may also be linked using account information as a key.

Next, referring to Fig. 7, a device of the update of the IC card will be described.

The expiration date of the IC card 201 is after five years for example and when a residual period is three months for example or shorter, it is an advance notified period for advising an update procedure of the IC card 201. The mail of the new IC card 201 from a financial institution to a user is started one month before an expiration date and as the current card is expired when the expiration date passes, it is a warning period for urging the registration of biometric data to the new IC card 201.

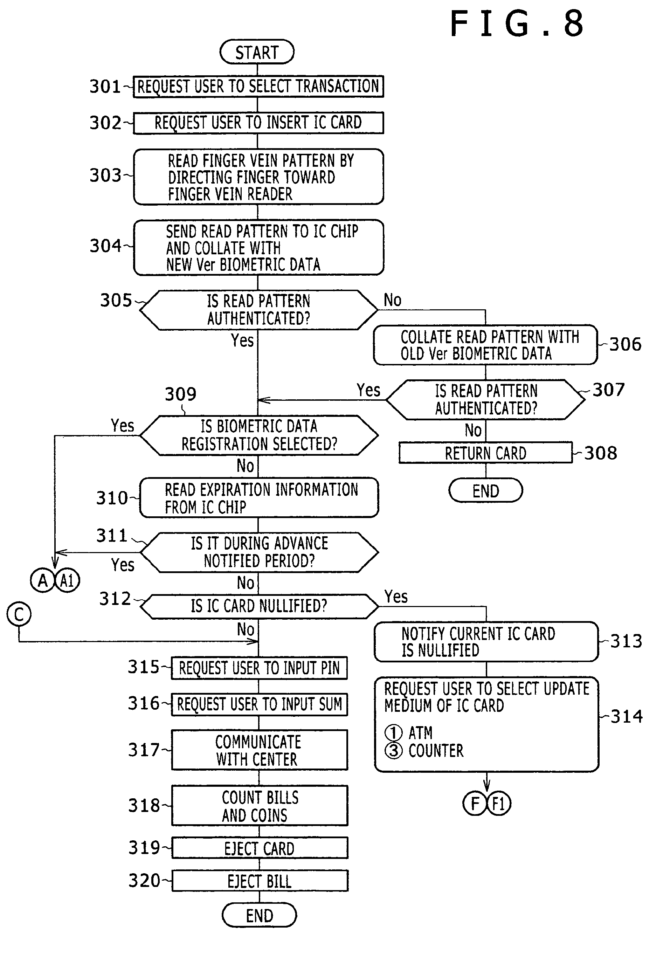

Next, referring to a flowchart showing a transaction process in Fig. 8, transaction at an ATM will be described.

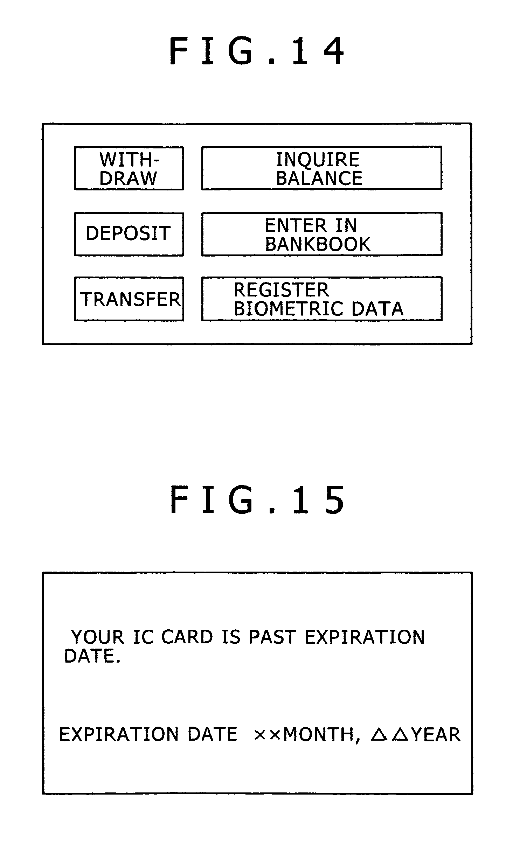

Normally, in a situation in which the ATM is waiting for a user, the main controller 110 instructs the display device 103 to display a transaction select screen shown in Fig. 14. A user selects a "withdrawal" key for example on the displayed select screen, operates the input device 104 (step 301), and inserts the IC card 201 into the card mechanism 105. Then, the magnetic reader/writer 111 reads the information of the magnetic stripe 202 and the IC reader/writer 112 reads registered information shown in Fig. 5 from the memory of the IC chip of the IC card (step 302). The information acquired from the IC chip is temporarily stored in the storage 114 in the main controller 110. Next, for biometrics authentication, a guidance screen is displayed on the display device 103 or operation is guided in voice, the user directs his/her finger toward the finger vein reader 102, and a finger vein pattern is read (step 303). The finger vein pattern of the user read by the finger vein reader 102 is processed by the main controller 110 and is sent to the IC chip 203 via the IC reader/writer 112.

In the memory of the IC chip 203 of the IC card 210, as shown in Fig. 5, two generations of biometric data in a new version and biometric data in an old version are stored as the biometric data of the user. In the case of the IC card not updated yet, only the biometric data in the old version is stored.

If the biometric data of two generations are registered, the finger vein pattern read by the finger vein reader 102 is first collated with the biometric data in the new version (step 304). It is authenticated by collating the biometric data of a finger vein whether the user is a right person or not (step 305). The collating process is performed by the execution of a CPU in the IC chip 203. As a result of authentication (first authentication: the step 305), when it is determined that the user is not the right person, the finger vein pattern is next collated with the biometric data in the old version (step 306). As a result of the collation (second authentication), it is verified that the user is the right person (step 307) and if authentication is rejected (the user is not the right person), the IC card 201 is returned to the user (step 308) and processing is finished. In the case of the IC card in which only the biometric data in the old version is held, as no biometric data in the new version is held, an authentication process is executed in the step 306.

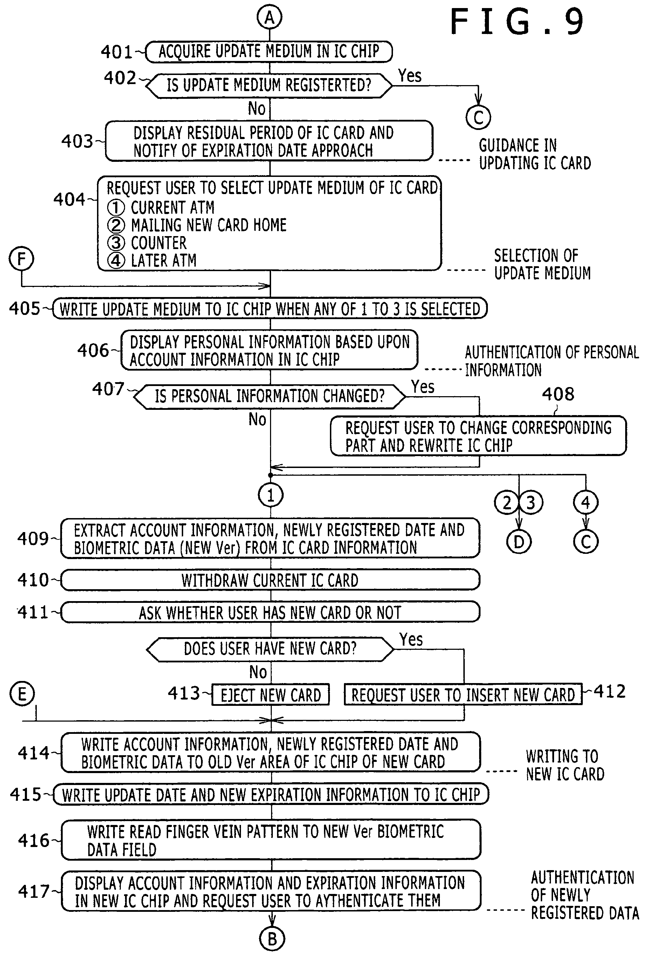

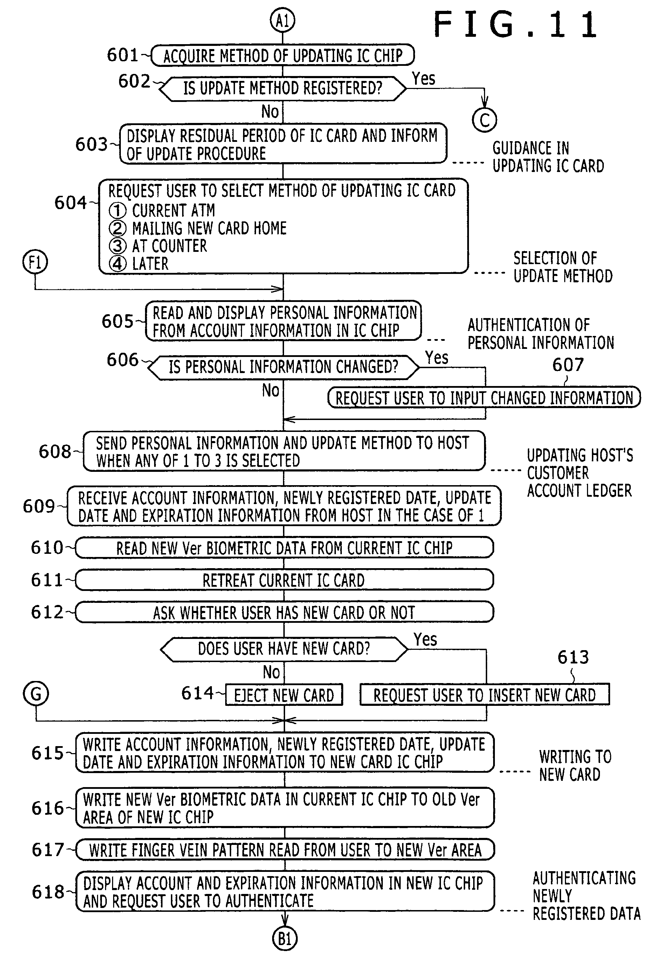

As results of first authentication (the step 305) and second authentication (the step 307), if the user is authenticated as a right person, it is checked whether "the registration of biometric data" or other transaction is selected (step 309). If "the registration of biometric data" is selected via the input device 104 by the user, the processing jumps to [A] shown in Fig. 9 or [A1] shown in Fig. 11.

If the "the registration of biometric data" is not selected, the expiration information of an expiration date and an advance notified date is read from the memory of the IC chip 203 (step 310) . It is checked whether the current transaction time is equivalent to an advance notified period or not (step 311). If the current transaction time is equivalent to the advance notified period, the processing jumps to [A] shown in Fig. 9 or [A1] shown in Fig. 11. If the current transaction time is not equivalent to the advance notified period, it is checked whether the expiration date passes or not (step 312). As a result of the check, if the expiration date passes, a guidance screen shown in Fig. 15 is displayed on the display device 103 and it is informed that the current IC card 201 owned by the user passes the expiration date (step 313).

Next, a guidance screen for selecting the update method of the IC card 201 is displayed on the display device 103. Two update methods, (1) an update process is continued as it is at the currently used ATM and (3) the user goes an office of the fanatical institution and performs a update procedure, are displayed on the display device 103 and one of them is selected by the user (step 314). After one is selected, the processing jumps to [F] shown in Fig. 9 or [F1] shown in Fig. 11.

If the IC card 201 is before the expiration date in the determination of the expiration date (the step 312), normal transaction is executed, the user is requested to input PIN via the input device 104 (step 315) and next, is requested to input a withdrawn sum (step 316).

When the input of a series of information is finished, the communication unit 115 of the main controller 110 sends account information read from the IC chip 203, input PIN and the sum to be withdrawn to the host computer 207 and receives required information (step 317). The host computer 207 collates the received PIN with registered PIN, authenticates the user, and updates the account balance of the user. The host computer sends the result of the process to the ATM 101.

The main controller 110 of the ATM 101 determines whether or not the transaction should be permitted based upon an answer received from the host computer 207. If the answer that the transaction should be permitted is received, the bill deposit/withdrawal device 106 and the coin deposit/withdrawal device 107 are driven and preparation for withdrawing the sum input via the input device 104 by the user is made (step 318). The card mechanism 105 ejects the card 201 and the statement printer 108 prints and outputs transaction information on a statement (step 319). The bill deposit/withdrawal device 106 and the coin deposit/withdrawal device 107 eject bills or coins from respective exits (step 320).

Normal cash withdrawal transaction is as described above. Even if other transaction, for example, transfer is selected, the above-mentioned basic operational flow is similar.

If the user selects "the registration of biometric data" on the transaction select screen shown in Fig. 14 and the current time is equivalent to the advance notified period in the step 311, the processing jumps to [A]shown in Fig. 9 or [A1] shown in Fig. 11.

Fig. 9 is a flowchart showing a process for updating the IC card 201.

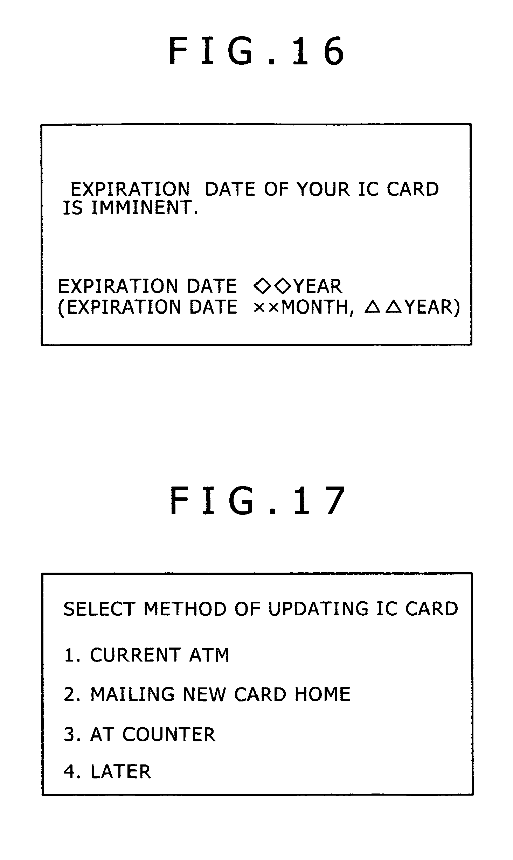

The main controller 110 acquires information showing an update method from read information shown in Fig. 5, stored in the storage 114 and previously acquired in the IC chip of the IC card (step 401). It is checked whether the update method of the IC card 201 is registered in the IC chip in past transaction or not (step 402). If the update method is registered, processing jumps to [C] the step 315 shown in Fig. 8. If the update method is not registered, a guidance screen shown in Fig. 16 is displayed on the display device 103 and the residual period till the expiration date is displayed (step 403).

Next, a guidance screen shown in Fig. 17 is displayed and a plurality of update methods of the IC card 201 are shown. For the update methods, four methods that (1) an update process is continued at the current ATM as it is, that (2) a new IC card 201 will be mailed home, that (3) the user goes to an office of the financial institution and performs an update procedure and that (4) the user will perform an update procedure in the next transaction or later are displayed, and the user is requested to select any method via the input device 104 (step 404). If any of (1) to (3) is selected, the result of the selection is written to an area for the update method of the IC chip 203 (step 405). Next, personal information such as a name, an address and a phone number is acquired from account information stored in the storage 114 in the IC chip 203 and is displayed on the display device 103 (step 406). A suitable guidance screen is displayed and the user is requested to check whether the personal information is changed or not (step 407). If the personal information is changed, the user is requested to input a changed part via the input device 104 and the account information in the IC chip 203 is rewritten (step 408).

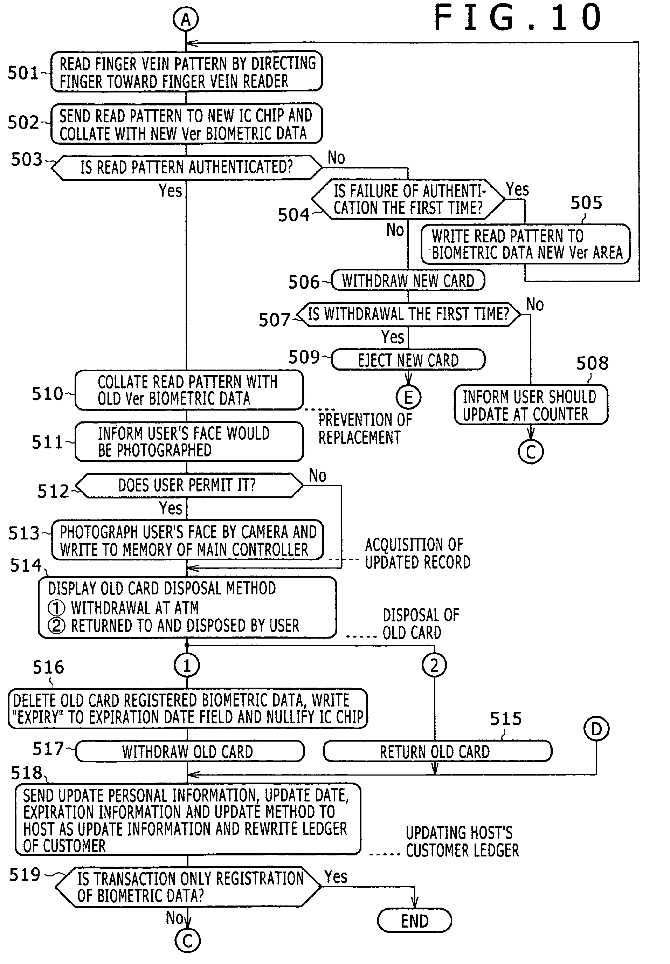

If (2) or (3) is selected for the update method, the processing jumps to [D] a step 518 shown in Fig. 10 and if (4) is selected, the processing jumps to [C] the step 315 shown in Fig. 8.

If (1) is selected for the update method of the IC card 201, account information, a newly registered date and biometric data (in a new version) are extracted from registered information stored in the storage 114 in the IC card (step 409). Next, the IC card 201 inserted and carried into/in the card mechanism 105 is once carried to the expellant/withdrawal route 121 shown in Fig. 13 and the current IC card 201 is once expelled (step 410). A guidance screen of whether the user has a new IC card 201 with him/her or not is displayed on the display device 103 and the user is requested to input for verification (step 411). If the user has the new IC card with him/her, the user is requested to insert the new IC card 201 into the ATM (step 412). If the user has no new IC card with him/her, the IC card issue device 120 is driven, a new IC card 201 stored beforehand is sent to the carrier, and is carried (step 413). The IC reader/writer 112 writes the account information, the newly registered date and the biometric data in the new version respectively acquired in the step 409 to a memory of an IC chip 203 of the new IC card 201 (step 414). In this case, the biometric data in the new version is stores in an old version area in the memory of the IC chip 203. The current date is written to an update date area of the IC chip and the expiration information of an expiration date and an advance notified first date respectively based upon the update date is written (step 415).

Further, a finger vein pattern of the user read by the finger vein reader 102 is written to a new version biometric data area in the memory of the new IC card (step 416). To enable the user to determine whether the written contents are right or not, account information and expiration information are read from the IC chip 203 of the new IC card, are displayed on the display device 103, and the user is requested to check the contents (step 417). When it is input that the user verifies the registered contents, the processing jumps to [B] a step 501 shown in Fig. 10.

Next, a flowchart shown in Fig. 10 will be described.

Fig. 10 shows operation from the authentication of registered biometric data to the disposal of the old IC card. When the user directs his/her finger toward the finger vein reader 102, a vein pattern of the finger is read (step 501). The finger vein pattern of the user read by the finger vein reader 102 is temporarily stored in the storage 114 in the main controller 110 and is sent to the IC chip 203 via the IC reader/writer 112. The finger vein pattern is collated with new version biometric data of a finger vein beforehand registered in the memory by the execution of the CPU in the IC chip 203 (step 502). It is authenticated by collating the biometric data of the finger vein whether the user is the right person or not (step 503). As a result of the collation, if it may not be authenticated that the user is the right person, it is checked whether the failure (No) of the authentication is for the first time or not (step 504). If the failure of the authentication is for the first time, the processing is returned to the step 501 after the read biometric data of the finger vein of the user is written to a biometric data new version area in the memory of the IC card (step 505). When the failure of the authentication is for the second time or more, it is determined that writing has failed and the new IC card 201 is withdrawn (step 506). It is checked whether the withdrawal is for the first time or not (step 507). If the withdrawal is for the second time or more, the main controller 110 determines that writing to the new IC card is defective, and after the main controller instructs to display guidance that the user should take a procedure for updating the IC card 201 at a counter of the corresponding bank on the display device 103, the processing jumps to [C] the step 315 shown in Fig. 8 (step 508). If the withdrawal is for the first time in the step 507, a new IC card 201 is ejected and the processing jumps to [E] the step 414 shown in Fig. 9 (step 509).

As a result of the collation with the new version biometric data in the step 503, if the authentication is possible (Yes), the finger vein pattern is next collated with the biometric data in the old version (step 510). This is the collation for making sure, the result of the collation with the biometric data in the old version is merely stored in the memory 116 in the main controller 110 as a log, and has no affect upon the following process. When it is authenticated that the user is the right person in the authentication by the collation (the step 503), the main controller 110 instructs to display guidance that the user' s face will be photographed as the record of a process for updating the IC card 201 on the display device 103 (step 511). The guidance asks the user whether to permit photography or not and requests the user to input it via the input device 104 (step 512). If the user permits photography, the user's face is photographed by the camera 118 and the data of a photographed face image is stored in the memory 116 of the main controller 110 (step 513).

Next, control is transferred to a process for disposing the old IC card 201. For a method of disposal, two methods of (1) withdrawing and disposing the IC card at an ATM after the IC card is nullified and of (2) returning the IC card to the user and disposing it by the user himself/herself are displayed on the display device 103 and the user is requested to select either method via the input device 104 (step 514). When (2) is selected, the card mechanism 105 is driven and the old IC card 201 once retreated is returned to the user (step 515).

In the meantime, when the user selects (1), the main controller 110 deletes the registered biometric data in the memory of the old IC card 201 via the IC reader/writer 112, writes "expiry" to an expiration date field, and executes a process for nullifying the IC chip (step 516). The old IC card is withdrawn in the withdrawal box 122 via the expellant/withdrawal route 121 (step 517).

To update the registered data of the user's account ledger in the host computer, personal information, an update date, expiration information and an update method respectively written to the new IC card 201 are sent to the host computer as updated information. The host computer rewrites and updates the personal information, the update date, the expiration information and the update method based upon the registered data of the user's account ledger shown in Fig. 6 (step 518). It is checked whether or not the initially selected transaction (selected in the step 301 shown in Fig. 8) is the registration of biometric data, if the transaction is only the registration of biometric data, the processing is finished, and if not, the processing jumps to the [C] the step 315 shown in Fig. 8 (step 519).

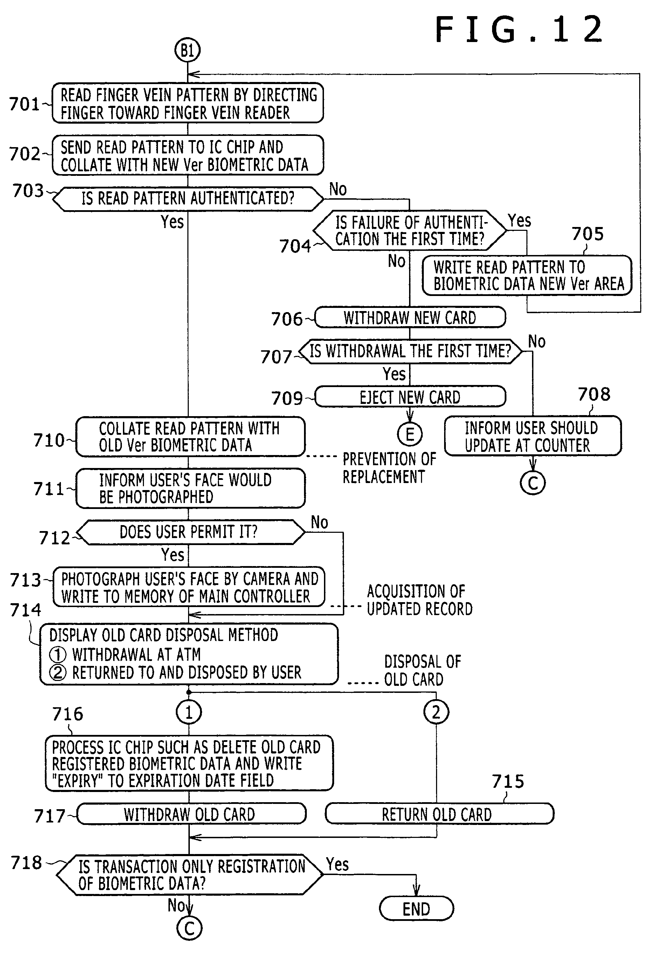

Next, referring to Figs. 11 and 12, another embodiment will be described.

Figs. 9 and 10 show the example in which the old biometric data and other information respectively read from the old IC card 201 are transferred to the new IC card 201. In the meantime, Figs. 11 and 12 show the embodiment that the DB 206 of a host computer for storing registered data of the user's account ledger is utilized. Referring to Fig. 11, the embodiment will be described below. Fig. 8 and others may also be referred according to circumstances.

If the registration of biometric data is selected in the selection of transaction in the step 309 shown in Fig. 8 or it is an advance notified period [A1] in the step 311, an update method is read from the IC chip 203 (step 601). It is checked whether or not the update method of the IC card 201 is registered in the past transaction (step 602). If the update method is already registered, the processing jumps to [C] the step 315 shown in Fig. 8. If no update method is registered, a residual period till expiration date is displayed on a display device 103 and a procedure for updating the IC card 201 is displayed (step 603).

For a method of updating the IC card, four methods of (1) continuing an update process at the currently operated ATM as it is, of (2) requesting to mail a new IC card 201 home, of (3) going to an office of a financial institution and taking an update procedure and of (4) taking the update procedure next time or later are displayed, and a user is requested to select any via an input device 104 (step 604). Next, personal information such as a name, an address and a phone number is read from account information in an IC chip 203, is displayed on the display device 103 (step 605), and the user is requested to check whether the personal information is changed or not (step 606).

If the personal information is changed, the user is requested to input changed information via the input device 104 (step 607). The input personal information after a change is written from a main controller 110 to the corresponding personal information area of the IC chip 203 of the IC card via an IC reader/writer 112. If any of (1) to (3) is selected, the personal information and the information of an update method are sent to the host computer (step 608). The host computer returns account information, a newly registered date, an update date and expiration information to the ATM 101 if (1) is selected after registered data of the user's ledger in the DB 206 is updated.

The ATM receives an answer from the host computer (step 609). Biometric data in a new version is read from the IC chip 203 of the currently used IC card (step 610).

Next, the current IC card 201 immediately under the IC reader/writer 112 is once retreated to an expellant/withdrawal route 121 (step 611). A question of whether the user has a new IC card 201 with him/her or not is displayed on the display device 103 (step 612). If the user has the new IC card, the user is requested to insert the new IC card 201 into a card mechanism 105 (step 613) and if the user has no new IC card, a new IC card 201 is ejected from an IC card issue device 120 (step 614).

The information received in the step 609 such as the account information, the newly registered date, the update date and the expiration information is written to an area of account information, a newly registered date, an update date and expiration information in a memory of a new IC chip 203 of the new IC card inserted onto a carrier of the card mechanism 105 or ejected (step 615). New version biometric data read from the IC chip 203 of the IC card used heretofore is written to an area of old version biometric data of the new IC card (step 616). Next, the biometric data of a finger vein pattern of the user read by a finger vein reader 102 is written to an area of new version biometric data in the memory of the new IC card (step 617). To check whether the contents written to the new IC card are right or not, account information and expiration information are read from the IC chip 203 of the new IC card via the IC reader/writer 112, are displayed on the display device 103, and the user is requested to check whether the displayed contents are right or not (step 618). If the displayed contents are not right, the user is requested to point out it via the input device 104 and in this case, for example, registration is tried again. On the other hand, as the user inputs it if the registered contents are right, operation for checking the registered contents is finished and the processing jumps to [B1] shown in Fig. 13.

Fig. 12 is a flowchart showing a process from the verification of registered biometric data to the disposal of the old IC card in another embodiment. Fig. 12 is equivalent to Fig. 10 in the first embodiment.

The user is requested to direct his/her finger toward the finger vein reader 102 and a finger vein pattern is read (step 701). The finger vein pattern of the user read by the finger vein reader 102 is temporarily stored in a storage 114 in the main controller 110, is sent to the IC chip 203 via the IC reader/writer 112, and is collated with the new version biometric data of a finger vein beforehand registered in the memory of the IC chip 203 by the execution of a CPU (step 702) . It is checked by the collation of the finger vein pattern whether the user is a right person or not (step 703). As a result of the check, if it is not authenticated that the user is a right person, it is checked whether or not the failure (No) of authentication is for the first time (step 704). If the failure of the authentication is for the first time, the processing is returned to the step 701 after the read biometric data of the finger vein of the user is written to a biometric data new version area in the memory of the IC card (step 705). If the failure of the authentication is for the second time or more, it is determined that writing fails and the new IC card 201 is withdrawn (step 706). It is checked whether the withdrawal is for the first time or not (step 707). If the withdrawal is for the second time or more, the user is requested to take a procedure for updating the IC card 201 at a counter, and the processing jumps to [C] the step 315 shown in Fig. 8 (step 708). If the withdrawal is for the first time in the step 707, a new IC card 201 is ejected and the processing jumps to [G] the step 615 shown in Fig. 11 (step 709).

If authentication is possible as a result of the collation with the new version biometric data in the step 703, the read finger vein pattern is also collated with the old version biometric data to make sure (step 710). When it is authenticated that the user is the right person, the main controller 110 instructs to display notice that the user's face will be photographed as the record of the process for updating the IC card 201 on the display device 103 (step 711). It is checked whether the user permits photography or not (step 712). If the user permits it, the user's face is photographed by a camera 118, and the image data of the face is stored in a memory 116 of the main controller 110 (step 713).

Next, for a method of disposing the old IC card 201, two methods, (1) withdrawing and disposing the card at an ATM after the card is nullified and (2) returning the card to the user and disposing it by the user himself/herself, are displayed on the display device 103 and the user is requested to select either (step 714). When (2) is selected, the old IC card 201 is returned to the user (step 715). When (1) is selected, the card is withdrawn in a withdrawal box in the ATM (step 717) after a nullifying process such as "expiry" is written to an expiration date field of the old IC card 201 is executed (step 716). It is checked whether or not the transaction selected in the step 301 shown in Fig. 8 is only the registration of biometric data. If the transaction is only the registration of biometric data, a series of process is finished, and if not, the processing jumps to [C] the step 315 shown in Fig. 8 (step 718).

In this embodiment, the example utilizing authentication by a finger vein as biometric data is described above, however, in another example, the utilization of biometrics authentication by a hand vein, a fingerprint, an iris, a face and a signature is also conceivable.

In the above-mentioned embodiments, authentication is made by collating biometric data beforehand registered in the memory in the IC chip with biometric data read by the finger vein reader (a biometer), for example, of the ATM by the execution of the CPU in the IC card. However, according to a transformed example, this collation may also be executed by the CPU 113 in the main controller 110 of the ATM. In this case, biometric data beforehand stored in the memory of IC card is acquired, and the biometric data in the IC card and biometric data detected by the biometer in the ATM are collated by the execution of the CPU 113.

In another example that biometric data of a user is stored in the DB 206 of the host computer in relation to the user's PIN, the above-mentioned collation may also be executed by the host computer. In this case, the host computer collates the biometric data of the user beforehand stored in the DB 206 and biometric data detected by a biometer of the ATM. In this case, the update of biometric data means a process for updating biometric data in the DB 206.

In the above-mentioned embodiments, it is premised that for a process for updating the IC card, the IC card is replaced with a new IC card, however, if the IC card may not be replaced with a new IC card, a process for updating biometric data is executed, and a process for storing newly acquired biometric data in a new version area of the IC card shown in Fig. 5 and used heretofore and storing biometric data heretofore stored in the new version area in an old version area of the same card is executed.

As described above, according to these embodiments, the process for updating the user's own IC card may be executed by the user's own operation by the way of transaction in cash at the ATM without visiting an office, etc. of a financial institution, and the handiness and the security of the user may be secured. In authentication by biometric data, both its new data and its old data may be used by storing biometric data of the user registered in the IC card as two generations of the new data and the old data. Therefore, as a result of collation with biometric data acquired from the reader, the biometric data as either the new or the old data has only to be matched and the rate of collation is enhanced.

According to an ATM and a CD provided with a mechanism for issuing a new IC card, a bank clerk of a financial institution has only to set new IC cards in them. Therefore, it is no longer necessary for a bank clerk to record and mail information for every user in a new IC card as heretofore and perform a process and operation for reading biometric data of a user who visits an office by a machine and registering it in a new IC card, and the cost may be reduced.

## Claims

1. An automated teller machine that authenticates a user based upon his/her biometric data and permits the user to perform a transaction in cash, comprising:
a display device (103) that displays guidance for transaction for the user;
an input device (104) on which the user performs input operation;
a medium handling mechanism (105) provided with a reader/writer (111, 112) that reads/writes information from/to a memory of a medium used by the user;
a biometric data acquisition unit (102) that acquires biometric data of the user; and
a processor (110) that stores new biometric data of the user acquired by the biometric data acquisition unit (102) in the memory of the medium and executes a process for updating the medium of the user when it is determined that the user is a right person as a result of authentication based upon biometric data acquired from the biometric data acquisition unit (102).

2. The machine of claim 1, wherein:
information related to an expiration date stored in the memory of the medium is acquired by the reader/writer (111, 112); and
the processor (110) calculates a residual period of the medium based upon the expiration date and controls to display on the display device (103) information relating the residual period and/or methods of updating the medium to enable a user to select any of them, when it is determined that the residual period is equal to or shorter than a predetermined period.

3. The machine of claim 1 or 2, wherein:
the medium handling mechanism (105) accepts a new IC card (201) brought and inserted by a user; and
the reader/writer (111, 112) writes new biometric data in a memory of the new IC card (201).

4. The machine of claim 1, comprising:
an IC card issue device (120) that stores a plurality of new IC cards (201), wherein:
the IC cards (201) are ejected one by one from the IC card issue device (120) according to a request input from the input device (104); and
new biometric data is stored in memories of the IC cards (201) via the reader/writer (111, 112).

5. The machine of claim 3 or 4, further comprising a camera (118) that photographs a user's face,
wherein when biometric data is updated, image data of the user's face photographed by the camera (118) is stored in a memory of an IC card (201).

6. The machine of claim 1, wherein:
when biometric data is updated and a new medium is issued, the processor (110) instructs to display methods of disposing an old medium on the display and requests a user to select any of the methods via the input device (104); and
when a method of withdrawing the old medium in the machine is selected, the processor (110) instructs the reader/writer (111, 112) to write "expiry" to a field of information related to an expiration date stored in a memory of the old medium.

7. An automated teller machine that authenticates a user using first biometric data of the user stored in a memory provided in a medium and permits the user to perform a transaction in cash, comprising:
a display device (103) that displays guidance for transaction for the user;
an input device (104) on which the user performs input operation;
a medium handling mechanism (105) provided with a reader/writer (111, 112) that reads/writes information from/to the memory of the medium;
a biometric data acquisition unit (102) that acquires biometric data of the user; and
a processor (110) that stores the first biometric data and new second biometric data of the user acquired by the biometric data acquisition unit (102) in a memory of a new medium and executes a process for updating the medium of the user when it is determined that the user is a right person as a result of authentication based upon biometric data acquired from the biometric data acquisition unit (102).

8. The machine of claim 7, wherein:
collating means for collating biometric data acquired from the biometric data acquisition unit (102) with first or second biometric data stored in the memory of the medium is provided to the medium; and
a user is authenticated according to a result of collation by the collating means.

9. The machine of claim 8, wherein:
when a user performs a transaction using a medium after a process for updating the medium, the collating means collates biometric data acquired from the biometric data acquisition unit (102) with either of the first or second biometric data stored in the memory of the medium; and
when both biometric data are matched as a result of collation, the processor (110) permits the user the transaction.

10. The machine of claim 7, wherein:
the collating means collates the second biometric data before the first biometric data; and.
the collating means preferably collates the second biometric data acquired from the biometric data acquisition unit (102) and first biometric data stored in the memory after the first and second biometric data are stored in the memory of the medium.

11. An automated transaction system based upon a cash transaction system provided with an automated teller machine (101) that authenticates a user who utilizes a medium for transaction based upon his/her biometric data and permits the user to perform a transaction in cash and a computer (207) connected to the automated teller machine (101) and having a database (206) that manages ledger data including account information of the user, wherein:
account information for transaction, information related to the update of the medium and biometric data of the user are stored in a memory provided in the medium;
the automated teller machine (101) is provided with a display device (103) that displays guidance for transaction for the user, an input device (104) on which the user performs input operation, a medium handling mechanism (105) provided with a reader/writer (111, 112) that reads/writes information from/to the memory of the medium, a biometric data acquisition unit (102) that acquires biometric data of the user and a processor (110) that stores new biometric data of the user acquired by the biometric data acquisition unit (102) in the memory of the medium and executes a process for updating the medium of the user when it is determined that the user is a right person as a result of authentication based upon biometric data acquired from the biometric data acquisition unit (102); and
the host computer (207) registers information related to the update of the medium, relating to account information of the user when the medium of the user is updated.

12. The system of claim 14, wherein authentication based upon biometric data is made by
collating biometric data acquired from the biometric data acquisition unit (102) and biometric data stored in a memory of the medium by the execution of a CPU provided in the medium, or
collating biometric data acquired from the biometric data acquisition unit (102) with biometric data of the user registered in the database (206) beforehand, by the processing of the host computer (207).

13. The system of claim 11 or 12, wherein if personal information of a user is changed, it is updated by storing the changed personal information input via the input device (104) by the user in the memory of the medium.

14. An automated transaction method in which a user operates an automated teller machine (101) utilizing a card medium, biometric data of the user is authenticated and the user is permitted transaction in cash, comprising:
a biometric data acquisition step for acquiring biometric data of the user by a biometric data detector in transaction;
a step for collating the acquired biometric data with first biometric data of the user stored in a memory provided in the medium;
a step for storing the first biometric data and new second biometric data of the user acquired by the biometric data detector in a memory of a new medium when it is determined that the user is a right person as a result of the collation; and
a step for ejecting the new medium toward the user.

15. The method of claim 14, wherein:
when a user performs a transaction using the new medium, biometric data acquired from the biometric data detector and either of the first or second biometric data stored in the memory of the new medium are collated; and
if both biometric data are matched as a result of collation, transaction of the user is permitted.
